# EUROPÄISCHE PATENTSCHRIFT

(11) **EP 2 478 044 B1**
(45) Veröffentlichungstag und Bekanntmachung des Hinweises auf die Patenterteilung: **17.07.2013**
(21) Anmeldenummer: 10751679.1
(22) Anmeldetag: 10.09.2010
(51) Int. Cl.: C08J 9/00, C09K 21/04, C08K 5/50

(54) **HALOGENFREIE, FLAMMGESCHÜTZTE POLYMERSCHAUMSTOFFE, ENTHALTEND MINDESTENS EINE OLIGOPHOSPHORVERBINDUNG**
HALOGEN-FREE, FLAME-PROOF POLYMER FOAMS CONTAINING AT LEAST ONE OLIGOPHOSPHORUS COMPOUND
MOUSSES POLYMÈRES IGNIFUGES EXEMPTES D'HALOGÈNE CONTENANT AU MOINS UN COMPOSÉ OLIGOPHOSPHORÉ

(30) Priorität: 14.09.2009 EP 09170196
(43) Veröffentlichungstag der Anmeldung: 25.07.2012
(73) Patentinhaber: BASF SE, 67056 Ludwigshafen (DE)
(72) Erfinder: HAHN, Klaus, 67281 Kirchheim (DE); KRIHA, Olaf, 67227 Frankenthal (DE); BELLIN, Ingo, 68307 Mannheim (DE); SPIES, Patrick, 67433 Neustadt (DE); FUCHS, Sabine, 68167 Mannheim (DE); DEGLMANN, Peter, 68163 Mannheim (DE); MASSONNE, Klemens, 67098 Bad Dürkheim (DE); DENECKE, Hartmut, 67071 Ludwigshafen (DE); FLECKENSTEIN, Christoph, 63579 Freigericht (DE); JANSSENS, Geert, 67159 Friedelsheim (DE)
(86) Internationale Anmeldenummer: PCT/EP2010/063304
(87) Internationale Veröffentlichungsnummer: WO 2011/029901

(56) Entgegenhaltungen:
- EP-A1- 0 834 529
- EP-A2- 0 320 761
- WO-A1-2009/030708
- WO-A2-2009/035881
- US-A1- 2006 189 703
- US-B1- 6 369 140

## Beschreibung

Die Erfindung betrifft halogenfreie, flammgeschützte Polymerschaumstoffe, die als Flammschutzmittel mindestens eine acyclische Oligophosphorverbindung enthalten, sowie Verfahren zu ihrer Herstellung.

Die Ausrüstung von Polymerschaumstoffen mit Flammschutzmitteln ist für eine Vielzahl von Anwendungen von Bedeutung, beispielsweise für Polystyrol-Partikelschaumstoffe aus expandierbarem Polystyrol (EPS) oder Polystyrol-Extrusionsschaumstoffplatten (XPS) zum Isolieren von Gebäuden. Dabei werden für Polystyrol-Homo- und Copolymere bisher überwiegend halogenhaltige, insbesondere bromierte organische Verbindungen eingesetzt. Eine Reihe dieser bromierten Substanzen ist jedoch auf Grund ihrer potentiellen Umwelt- und Gesundheitsgefährdung in der Diskussion.

Die US 4,111,899 beschreibt cyclische oder alicylclische Oligophosphorverbindungen mit ein oder mehreren P-P-Bindungen, die in Mengen von ca. 1000 ppm zur Stabilisierung von thermoplastischen Kunststoffen, insbesondere Polycarbonaten, bei Hitze - und/oder Sauerstoffeinwirkung beim Spritzgießen eingesetzt werden.

Die US 6,369,140 beschreibt unter anderem cyclische Oligophosphine in geringen Konzentrationen als Stabilisatoren für Polyolefine gegen Abbau durch Hitze, mechanische Belastung oder Licht.

Die WO 2009/030708 beschreibt cyclische und polymere Arylphosphine als Flammschutzmittel in verschiedenen Kunststoffen, beispielsweise Polycarbonaten oder Acrylonitril-Butadien-Styrol-Copolymeren (ABS).

Die EP-A 834 529 beschreibt expandierbare Styrolpolymerisate, die als halogenfreies Flammschutzmittel eine Mischung aus einer Phosphorverbindung und einem wasserabspaltenden Metallhydroxid enthalten. Bevorzugt werden 5 bis 10 Gew.-% Mg(OH)₂ und 5 bis 10 Gew.-% Triphenylphosphat (TPP) in einem Extruder in geschmolzenes Polystyrol eingearbeitet und granuliert und das Granulat in wässriger Suspension mit Treibmittel nachimprägniert.

Die WO 00/34342 beschreibt ein Verfahren zur Herstellung von expandierbarem Polystyrol durch Suspensionspolymerisation von Styrol in Gegenwart von 5 - 50 Gew.-% Blähgraphit und gegebenenfalls 2 bis 20 Gew.-% einer Phosphorverbindung als Flammschutzmittel.

Die Verwendung von 9,10-Dihydro-9-oxa-10-phospha-phenanthren-10-oxid (DOP) und dessen Derivate zur Herstellung von halogenfrei, flammgeschützten Polymerschaumstoffen ist aus WO 2006/027241 bekannt.

Halogenfreie Flammschutzmittel müssen zur Erreichung der gleichen Flammschutzwirkung von halogenhaltigen Flammschutzmitteln in der Regel in deutlich höhere Mengen eingesetzt werden. Deshalb können halogenfreie Flammschutzmittel, die bei thermoplastischen Polymeren, wie Polystyrol einsetzbar sind, häufig nicht bei Polymerschaumstoffen eingesetzt werden, da sie entweder den Schäumprozess stören oder die mechanischen und thermischen Eigenschaften des Polymerschaumstoffes beeinflussen. Bei der Herstellung von expandierbarem Polystyrol durch Suspensionspolymerisation können außerdem die hohen Flammschutzmittelmengen die Stabilität der Suspension verringern.

Die Wirkung der bei thermoplastischen Polymeren eingesetzten Flammschutzmittel bei Polymerschaumstoffen ist häufig aufgrund des unterschiedlichen Brandverhaltens und unterschiedlicher Brandtests nicht vorhersagbar.

Aufgabe der Erfindung war es daher, ein halogenfreies Flammschutzmittel für Polymerschaumstoffe, insbesondere für expandierbares Polystyrol (EPS) oder Polystyrol-Extrusionsschaumstoffplatten (XPS) zu finden, das den Schäumprozess und die mechanischen Eigenschaften nicht wesentlich beeinflusst und insbesondere die Herstellung von überwiegend geschlossenzelligen Polymerschaumstoffen ermöglicht.

Demgemäß wurden halogenfreie, flammgeschützte Polymerschaumstoffe, gefunden, welche als Flammschutzmittel mindestens eine acyclische Oligophosphonrerbindung gemäss Anspruch 1 enthalten. Überraschenderweise zeigen diese Oligophosphorverbindungen in Polymerschaumstoffen eine wesentlich bessere Wirksamkeit als Flammschutzmittel gegenüber den üblicherweise für Polymerschaumstoffen eingesetzten halogenfreien Flammschutzmitteln.

Bevorzugt liegt der Phosphorgehalt der Oligophosphorverbindungen im Bereich von 5 - 50 Gew.-%, insbesondere im Bereich von 8 bis 25 Gew.-%. Bevorzugte Flammschutzmittel enthalten mindestens ein acylisches Oligophosphinhalkogenid mit 2 bis 6 Phosphoratomen und mindestens einer Phosphor-Phosphorbindung. Bevorzugt sind alle Phosphoratome linear oder cyclisch durch P-P-Bindungen miteinander verknüpft.

Geeignete Oligophosphorverbindungen sind beispielsweise solche mit den Strukturen la, Ib oder Ic:

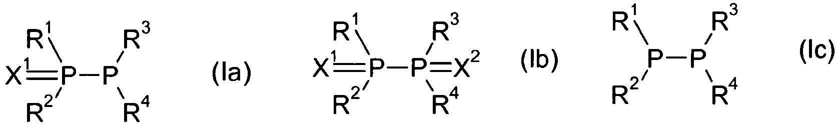

Die Reste R¹-R⁴ können unabhängig von einander ausgewählt sein aus der Gruppe von C₁-C₁₆-alkyl, C₁-C₁₆-alkenyl, C₁-C₁₆-alkoxy, C₁-C₁₆-alkenyloxy, C₃-C₁₀-cycloalkyl, C₃-C₁₀-cycloalkoxy, C₆-C₁₀-aryl, C₆-C₁₀-aryloxy, C₆-C₁₀-aryl-C₁-C₁₆-alkyl, C₆-C₁₀-aryl-C₁-C₁₆-alkoxy, NR²R³, COR², COOR² und CONR²R³, und die Reste X¹ und X²- unabhängig voneinander O oder S bedeuten.

Eine weitere Gruppe von geeigneten Oligophosphorverbindungen weisen eine der folgenden Strukturen IIa, IIb oder IIc auf: 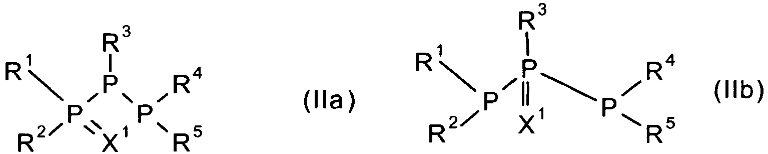 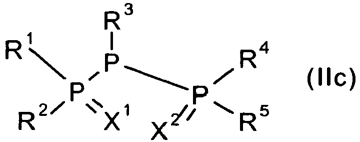 wobei die Reste R¹-R⁵ unabhängig von einander ausgewählt sind aus der Gruppe von C₁-C₁₆-alkyl, C₁-C₁₆-alkenyl, C₁-C₁₆-alkoxy, C₁-C₁₆-alkenyloxy, C₃-C₁₀-cycloalkyl, C₃-C₁₀-cycloalkoxy, C₆-C₁₀-aryl, C₆-C₁₀-aryloxy, C₆-C₁₀-aryl-C₁-C₁₆-alkyl, C₆-C₁₀-aryl-C₁-C₁₆-alkoxy, NR²R³, COR², COOR² und CONR²R³, und die Reste X¹ und X² unabhängig voneinander O oder S bedeuten.

Als Flammschutzmittel besonders bevorzugt werden Tetraphenyldiphosphinmonoxid, Tetraphenyldiphosphinmonosulfid, Tetraphenyldiphosphindioxid, Tetraphenyldiphosphindisulfid, Tetraphenyldiphosphinoxidsulfid, 1,1,3,3-Tetramethoxy-2-phenyltriphosphin-1,3-dioxid, 1,1,3,3-Tetraethoxy-2-phenyltriphosphin-1,3-dioxid, 1,1,3,3-Tetraallyloxy-2-phenyltriphosphin-1,3-dioxid oder Mischungen davon eingesetzt werden.

Die erfindungsgemäßen halogenfreien, flammgeschützten Polymerschaumstoffe enthalten die cyclischen oder acyclischen Oligophosphorverbindungen in der Regel in einer Menge im Bereich von 0,5 bis 25 Gew.-%, bezogen auf den Polymerschaumstoff. Mengen von 5 -15 Gew.-%, bezogen auf den Polymerschaumstoff. gewährleisten insbesondere bei Schaumstoffen aus expandierbarem Polystyrol einen ausreichenden Flammschutz.

Die Wirksamkeit der Oligophosphorverbindungen kann durch den Zusatz geeigneter Flammschutzsynergisten, wie die thermischen Radikalbildner Dicumylperoxid, Di-tert-butylperoxid oder Dicumyl noch weiter verbessert werden. In diesem Falle werden üblicherweise zusätzlich zu der Oligophosphorverbindung 0,05 bis 5 Gew. Teile des Flammschutzsynergisten eingesetzt.

Auch können zusätzlich weiter Flammschutzmittel, wie Melamin, Melamincyanurate, Metalloxide, Metallhydroxide, Phosphate, Phosphinate, Blähgraphit oder Synergisten wie Sb₂O₃ oder Zn-Verbindungen eingesetzt werden. Geeignete zusätzliche halogenfreie Flammschutzmittel sind im Handel unter der Bezeichnung Exolit OP 930, Exolit OP 1312, DOPO, HCA-HQ, M-Ester Cyagard RF-1241, Cyagard RF-1243, Fyrol PMP, AlPi, Melapur 200, Melapur MC, APP erhältlich.

Falls auf die vollständige Halogenfreiheit des Polymerschaumstoffes verzichtet werden kann, können halogenreduzierte Schaumstoffe durch die Verwendung der erfindungsgemäßen Oligophosphorverbindung und den Zusatz geringerer Mengen an halogenhaltigen, insbesondere bromierten Flammschutzmitteln, wie Hexabromcyclodecan (HBCD), bevorzugt in Mengen im Bereich von 0,05 bis 1, insbesondere 0,1 bis 0,5 Gew.-% hergestellt werden.

Die halogenfreien, flammgeschützten Polymerschaumstoffe weisen bevorzugt eine Dichte im Bereich von 5 bis 200 kg/m³, besonders bevorzugt im Bereich von 10 bis 50 kg/m³ auf und sind bevorzugt zu mehr als 80 %, besonders bevorzugt zu 95 bis 100% geschlossenzellig.

Bevorzugt enthalten die halogenfreien, flammgeschützten Polymerschaumstoffe ein thermoplastisches Polymer, insbesondere ein Styrolpolymer.

Die erfindungsgemäßen halogenfrei flammgeschützten, expandierbaren Styrolpolymeren (EPS) und Styrolpolymerextrusionschaumstoffen (XPS) können durch Einmischen eines Treibmittels und der Oligophosphorverbindung in die Polymerschmelze und anschließende Extrusion und Granulierung unter Druck zu expandierbaren Granulaten (EPS) oder durch Extrusion und Entspannung unter Verwendung entsprechend geformter Düsen zu Schaumstoffplatten (XPS) oder Schaumstoffsträngen verarbeitet werden.

Bevorzugt weist das expandierbare Styrolpolymer ein Molekulargewicht M_{w} im Bereich von 120.000 bis 400.000 g/mol, besonders bevorzugt im Bereich von 180.000 bis 300.000 g/mol, gemessen mittels Gelpermeationschromatographie mit refraktiometrischer Detektion (RI) gegenüber Polystyrolstandards, auf. Aufgrund des Molekulargewichtsabbaus durch Scherung und/oder Temperatureinwirkung liegt das Molekulargewicht des expandierbaren Polystyrols in der Regel etwa 10.000 g/mol unter dem Molekulargewicht des eingesetzten Polystyrols.

Bevorzugt werden als Styrolpolymere glasklares Polystyrol (GPPS), Schlagzähpolystyrol (HIPS), anionisch polymerisiertes Polystyrol oder Schlagzähpolystyrol (A-IPS), Styrol-α-Methstyrol-copolymere, Acrylnitril-Butadien-Styrolpolymerisate (ABS), Styrol-Acrylnitril (SAN), Acrylnitril-Styrol-Acrylester (ASA), Methylmethacrylat-Butadien-Styrol (MBS), Methylmethacrylat-Acrylnitril-Butadien-Styrol (MABS)- polymerisate oder Mischungen davon oder mit Polyphenylenether (PPE) eingesetzt.

Die genannten Styrolpolymeren können zur Verbesserung der mechanischen Eigenschaften oder der Temperaturbeständigkeit gegebenenfalls unter Verwendung von Verträglichkeitsvermittlern mit thermoplastischen Polymeren, wie Polyamiden (PA), Polyolefinen, wie Polypropylen (PP) oder Polyethylen (PE), Polyacrylaten, wie Polymethylmethacrylat (PMMA), Polycarbonat (PC), Polyestern, wie Polyethylenterephthalat (PET) oder Polybutylenterephthalat (PBT), Polyethersulfonen (PES), Polyetherketonen oder Polyethersulfiden (PES) oder Mischungen davon in der Regel in Anteilen von insgesamt bis maximal 30 Gew.-%, bevorzugt im Bereich von 1 bis 10 Gew.-%, bezogen auf die Polymerschmelze, abgemischt werden. Des weiteren sind Mischungen in den genannten Mengenbereichen auch mit z. B hydrophob modifizierten oder funktionalisierten Polymeren oder Oligomeren, Kautschuken, wie Polyacrylaten oder Polydienen, z. B. Styrol-Butadien-Blockcopolymeren oder biologisch abbaubaren aliphatischen oder aliphatisch/aromatischen Copolyestern möglich.

Als Verträglichkeitsvermittler eignen sich z.B. Maleinsäureanhydrid-modifizierte Styrolcopolymere, Epoxidgruppenhaltige Polymere oder Organosilane.

Der Styrolpolymerschmelze können auch Polymerrecyklate der genannten thermoplastischen Polymeren, insbesondere Styrolpolymere und expandierbare Styrolpolymere (EPS) in Mengen zugemischt werden, die deren Eigenschaften nicht wesentlich verschlechtern, in der Regel in Mengen von maximal 50 Gew.-%, insbesondere in Mengen von 1 bis 20 Gew.-%.

Die treibmittelhaltige Styrolpolymerschmelze enthält in der Regel eine oder mehrere Treibmittel in homogener Verteilung in einem Anteil von insgesamt 2 bis 10 Gew.-% bevorzugt 3 bis 7 Gew.-%, bezogen auf die treibmittelhaltige Styrolpolymerschmelze. Als Treibmittel, eigenen sich die üblicherweise in EPS eingesetzten physikalische Treibmittel, wie aliphatischen Kohlenwasserstoffe mit 2 bis 7 Kohlenstoffatomen, Alkohole, Ketone, Ether oder halogenierte Kohlenwasserstoffe. Bevorzugt wird iso-Butan, n-Butan, iso-Pentan, n-Pentan eingesetzt. Für XPS wird bevorzugt CO₂ oder Mischungen mit Alkoholen oder Ketonen eingesetzt.

Zur Verbesserung der Verschäumbarkeit können feinverteilte Innenwassertröpfchen in die Styrolpolymermatrix eingebracht werden. Dies kann beispielsweise durch die Zugabe von Wasser in die aufgeschmolzene Styrolpolymermatrix erfolgen. Die Zugabe des Wassers kann örtlich vor, mit oder nach der Treibmitteldosierung erfolgen. Eine homogene Verteilung des Wassers kann mittels dynamischen oder statischen Mischern erreicht werden. In der Regel sind 0 bis 2, bevorzugt 0,05 bis 1,5 Gew.-% Wasser, bezogen auf das Styrolpolymer, ausreichend.

Expandierbare Styrolpolymere (EPS) mit mindestens 90% des Innenwassers in Form von Innenwassertröpfchen mit einem Durchmesser im Bereich von 0,5 bis 15 µm bilden beim Verschäumen Schaumstoffe mit ausreichender Zellzahl und homogener Schaumstruktur.

Die zugesetzte Treibmittel- und Wassermenge wird so gewählt, dass die expandierbaren Styrolpolymeren (EPS) ein Expansionsvermögen α, definiert als Schüttdichte vor dem Verschäumen/Schüttdichte nach dem Verschäumen höchstens 125 bevorzugt 25 bis 100 aufweisen.

Die erfindungsgemäßen expandierbaren Styrolpolymergranulate (EPS) weisen in der Regel eine Schüttdichte von höchstens 700 g/l bevorzugt im Bereich von 590 bis 660 g/l auf. Bei Verwendung von Füllstoffen können in Abhängigkeit von der Art und Menge des Füllstoffes Schüttdichten im Bereich von 590 bis 1200 g/l auftreten.

Des weiteren können der Styrolpolymerschmelze Additive, Keimbildner, Füllstoffe, Weichmacher, lösliche und unlösliche anorganische und/oder organische Farbstoffe und Pigmente, z.B. IR-Absorber, wie Ruß, Graphit oder Aluminiumpulver gemeinsam oder räumlich getrennt, z.B. über Mischer oder Seitenextruder zugegeben werden. In der Regel werden die Farbstoffe und Pigmente in Mengen im Bereich von 0,01 bis 30, bevorzugt im Bereich von 1 bis 5 Gew.-% zugesetzt. Zur homogenen und mikrodispersen Verteilung der Pigmente in dem Styrolpolymer kann es insbesondere bei polaren Pigmenten zweckmäßig sein ein Dispergierhilfsmittel, z.B Organosilane, epoxygruppenhaltige Polymere oder Maleinsäureanhydrid-gepfropfte Styrolpolymere, einzusetzen. Bevorzugte Weichmacher sind Mineralöle, Phthalate, die in Mengen von 0,05 bis 10 Gew.-%, bezogen auf das Styrolpolymerisat, eingesetzt werden können.

Zur Herstellung der erfindungsgemäßen expandierbaren Styrolpolymerisate kann das Treibmittel in die Polymerschmelze eingemischt werden. Ein mögliches Verfahren umfasst die Stufen a) Schmelzerzeugung, b) Mischen c) Kühlen d) Fördern und e) Granulieren. Jede dieser Stufen kann durch die in der Kunststoffverarbeitung bekannten Apparate oder Apparatekombinationen ausgeführt werden. Zur Einmischung eignen sich statische oder dynamische Mischer, beispielsweise Extruder. Die Polymerschmelze kann direkt aus einem Polymerisationsreaktor entnommen werden oder direkt in dem Mischextruder oder einem separaten Aufschmelzextruder durch Aufschmelzen von Polymergranulaten erzeugt werden. Die Kühlung der Schmelze kann in den Mischaggregaten oder in separaten Kühlern erfolgen. Für die Granulierung kommen beispielsweise die druckbeaufschlagte Unterwassergranulierung, Granulierung mit rotierenden Messern und Kühlung durch Sprühvernebelung von Temperierflüssigkeiten oder Zerstäubungsgranulation in Betracht. Zur Durchführung des Verfahrens geeignete Apparateanordnungen sind z.B.:
a) Polymerisationsreaktor - statischer Mischer/Kühler - Granulator
b) Polymerisationsreaktor - Extruder - Granulator
c) Extruder - statischer Mischer - Granulator
d) Extruder - Granulator

Weiterhin kann die Anordnung Seitenextruder zur Einbringung von Additiven, z.B. von Feststoffen oder thermisch empfindlichen Zusatzstoffen aufweisen.

Die treibmittelhaltige Styrolpolymerschmelze wird in der Regel mit einer Temperatur im Bereich von 140 bis 300°C, bevorzugt im Bereich von 160 bis 240°C durch die Düsenplatte gefördert. Eine Abkühlung bis in den Bereich der Glasübergangstemperatur ist nicht notwendig.

Die Düsenplatte wird mindestens auf die Temperatur der treibmittelhaltigen Polystyrolschmelze beheizt. Bevorzugt liegt die Temperatur der Düsenplatte im Bereich von 20 bis 100°C über der Temperatur der treibmittelhaltigen Polystyrolschmelze. Dadurch werden Polymerablagerungen in den Düsen verhindert und eine störungsfreie Granulierung gewährleistet.

Um marktfähige Granulatgrößen zu erhalten sollte der Durchmesser (D) der Düsenbohrungen am Düsenaustritt im Bereich von 0,2 bis 1,5 mm, bevorzugt im Bereich von 0,3 bis 1,2 mm, besonders bevorzugt im Bereich von 0,3 bis 0,8 mm liegen. Damit lassen sich auch nach Strangaufweitung Granulatgrößen unter 2 mm, insbesondere im Bereich 0,4 bis 1,4 mm gezielt einstellen.

Besonders bevorzugt wird ein Verfahren zur Herstellung von halogenfrei flammgeschützten, expandierbaren Styrolpolymeren (EPS), umfassend die Schritte
a) Einmischen eines organischen Treibmittels und 1-25 Gew.-% der erfindungsgemäßen acyclischen Oligophosphorverbindung in die Polymerschmelze mittels statischen oder dynamischen Mischer bei einer Temperatur von mindestens 150°C,
b) Kühlen der treibmittelhaltigen Styrolpolymerschmelze auf eine Temperatur von 120°C oder höher,
c) Austrag durch eine Düsenplatte mit Bohrungen, deren Durchmesser am Düsenaustritt höchstens 1,5 mm beträgt und
d) Granulieren der treibmittelhaltigen Schmelze direkt hinter der Düsenplatte unter Wasser bei einem Druck im Bereich von 1 bis 20 bar.

Es ist auch möglich, die erfindungsgemäßen, expandierbaren Styrolpolymeren (EPS) durch Suspensionspolymerisation herzustellen.

Bei der Suspensionspolymerisation wird als Monomer bevorzugt Styrol allein eingesetzt. Es kann jedoch zu bis zu 20 % seines Gewichts durch andere ethylenisch ungesättigte Monomere, wie Alkylstyrole, Divinylbenzol, Acrylnitril, 1,1-Diphenylether oder a-Methylstyrol ersetzt sein.

Bei der Suspensionspolymerisation können die üblichen Hilfsmittel, wie z.B. Peroxidinitiatoren, Suspensionsstabilisatoren, Treibmittel, Kettenüberträger, Expandierhilfsmittel, Keimbildner und Weichmacher zugesetzt werden. Die erfindungsgemäße cyclischen oder acyclischen Oligophosphorverbindung wird bei der Polymerisation in Mengen von 0,5 bis 25 Gew.-%, vorzugsweise von 5 bis 15 Gew.-%, zugesetzt. Treibmittel werden in Mengen von 3 bis 10 Gew.-%, bezogen auf Monomer zugesetzt. Man kann sie vor, während oder nach der Polymerisation der Suspension zusetzen. Geeignete Treibmittel sind aliphatische Kohlenwasserstoffe mit 4 bis 6 Kohlenstoffatomen. Es ist vorteilhaft, als Suspensionsstabilisatoren anorganische Pickering-Dispergatoren, z.B. Magnesiumpyrophosphat oder Calciumphosphat einzusetzen.

Bei der Suspensionspolymerisation entstehen perlförmige, im wesentlichen runde Teilchen mit einem mittleren Durchmesser im Bereich von 0,2 bis 2 mm.

Zur Verbesserung der Verarbeitbarkeit können die fertigen expandierbaren Styrolpolymergranulate durch Glycerinester, Antistatika oder Antiverklebungsmittel beschichten werden.

Das EPS Granulat kann mit Glycerinmonostearat GMS (typischerweise 0,25 %), Glycerintristearat (typischerweise 0,25 %) feinteiliger Kieselsäure Aerosil R972 (typischerweise 0,12 %) und Zn-Stearat (typischerweise 0,15 %), sowie Antistatikum beschichtet werden.

Die erfindungsgemäßen expandierbaren Styrolpolymergranulate können in einem ersten Schritt mittels Heißluft oder Wasserdampf zu Schaumpartikeln mit einer Dichte im Bereich von 8 bis 200 kg/m³, insbesondere 10 bis 50 kg/m³ vorgeschäumt und in einem 2. Schritt in einer geschlossenen Form zu Partikelformteilen verschweißt werden.

Die expandierbaren Polystyrolteilchen können zu Polystyrolschaumstoffen mit Dichten von 8 bis 200 kg/m³ bevorzugt von 10 bis 50 kg/m³, verarbeitet werden. Hierzu werden die expandierbaren Partikel vorgeschäumt. Dies geschieht zumeist durch Erwärmen der Partikel mit Wasserdampf in sogenannten Vorschäumern. Die so vorgeschäumten Partikel werden danach zu Formkörpern verschweißt. Hierzu werden die vorgeschäumten Partikel in nicht gasdicht schließende Formen gebracht und mit Wasserdampf beaufschlagt. Nach Abkühlen können die Formteile entnommen werden.

### Beispiele:

Eingesetzte Flammschutzmittel FR 1 - FR 10

### Diphosphine

| | | |
|---|---|---|
| 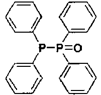 | Tetraphenyldiphosphinmonoxid | FR1 |
| 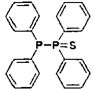 | Tetraphenyldiphosphinsulfid | FR2 |
| 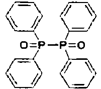 | Tetraphenyldiphosphindioxid | FR3 |
| 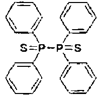 | Tetraphenyldiphosphindisulfid | FR4 |
| 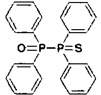 | Tetraphenyldiphosphinoxidsulfid | FR5 |

### Cyclische Oligophosphine (Referenz)

| | | |
|---|---|---|
| 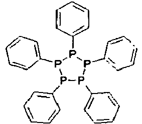 | Pentaphenylpentaphospholan | FR6 |

### Triphosphine

| | | |
|---|---|---|
| 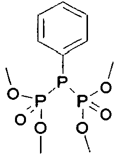 | 1,1,3,3-Tetramethoxy-2-phenyltriphosphin-1,3-dioxid | FR7 |
| 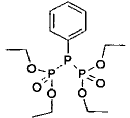 | 1,1,3,3-Tetraethoxy-2-phenyltriphosphin-1,3-dioxid | FR8 |
| 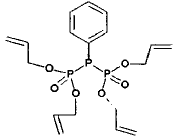 | 1,1,3,3-Tetraallyloxy-2-phenyltriphosphin-1,3-dioxid | FR9 |

Die in den Beispielen als Flammschutzmittel eingesetzten organischen Phosphorverbindungen FR1 bis FR 9 wurden entsprechend den nachfolgenden Herstellvorschriften synthetisiert:

Tetraphenyldiphosphindioxid und Tetraphenyldiphosphindisulfid aus Tetraphenyldiphosphin: (nach: W. Kuchen, H. Buchwald, Chem. Ber., 1958, 91, 2871-2877.)

### Tetraphenyldiphosphin:

Eine Lösung von 6 g (0.0325 Mol) Diphenylphosphin und 7.1 g (0.0325 Mol) Diphenylchlorphosphin in 100 ccm Ligroin (Sdp. 90- 100 °C, über Natrium destilliert) wurde unter Rühren und Rückfluß im Stickstoffstrom 3,5 Stdn. erwärmt. Hierbei spaltete sich lebhaft Chlorwasserstoff ab. Beim Abkühlen unter ständigem Rühren fiel Tetraphenyldiphosphin als weißes, feinkrist. Pulver aus, das unter Luftausschluß abgesaugt, mehrfach mit Ligroin gewaschen, i. Hochvak. getrocknet und unter Stickstoff aufbewahrt wurde. Schmp. (im evakuierten Röhrchen) 120.5 °C; Sdp.1 258 -260 °C. Leicht loslich in Benzol, Toluol, Tetrachlorkohlenstoff und Pyridin (mit gelber Farbe), wenig löslich in Äther, Äthanol und Ligroin. Ausb. ca. 80 % d. Th. C24H20P2 (370.4) Ber. P 16.73 Gef. P 16.62 Mol.-Gew. 391.6, 374.9 (nach RAST)

### Tetraphenyldiphosphindioxid:

In eine Suspension von 3.3 g Tetraphenyldiphosphin in 30 ccm absol. Toluol wurde unter Eiskühlung 3 Stdn. ein sorgfaltig getrockneter Luftstrom eingeleitet. Die zunächst farblose flüssige Phase färbte sich hierbei gelblich. Nach dieser Zeit wurde kurz zum Sieden erwärmt und noch soviel Toluol (ca. 30ccm) zugegeben, bis alles gelöst war. Beim Abkühlen schieden sich aus der klaren Lösung feine, weiße Kristalle aus, die nach mehrfacher Kristallisation aus Toluol im evakuierten Röhrchen scharf bei 167°C schmolzen. Ausb. 1.9 g (53 % d. Th.). C24H20O2P2 (402.4) Ber. P 15.40 Gef. P 15.38 Mol.-Gew. 418.5, 409.8 (nach RAST)

### Tetraphenyldiphosphindisulfid:

10.8 g Tetraphenyldiphosphin und 1.9 g Schwefel wurden in Schwefelkohlenstoff unter Stickstoff 8 Stdn. unter Rückfluß erwärmt. Beim Abkühlen schieden sich aus der klaren Lösung farblose Nadeln aus, die, aus Äthanol/Wasser umkristallisiert, bei 168.5°C schmolzen. Ausb. 4.2 g. Weitere 1.2 g der Verbindung wurden durch Einengen der Schwefelkohlenstofflösung und durch wiederholtes Umkristallisieren des hierbei abgeschiedenen krist. Produktes erhalten. Gesamtausb. 5.4 g (42.4 % d. Th.). Es ist löslich in Chloroform, Benzol, Toluol, Dioxan, Ather und verändert sich selbst beim Erwärmen mit verd. Natronlauge nicht merklich. C24H2OP2S2 (434.5) Ber. P 14.26 S 14.75 Gef. P 14.29 S 14.78 MolGew. 419.1, 427.6 (nach RAST)

### Tetraphenyldiphosphinmonooxid: (nach: E. Fluck, H. Binder, Inorg. Nucl. Chem. Letters, 1967, 3, 307-313.)

22 g (0,1 Mol) Diphenylphosphinchlorid werden mit 21,6 g (0,1 Mol) Diphenylphosphinigsäuremethylester, in 100 ml absolutem Benzol im schwachen Stickstoffstrom 2 Stunden am Rückfluß zum Sieden erhitzt. Anschließend wird das Benzol im Rotationsverdampfer abdestiiliert. Dabei fällt Tetraphenyldiphosphinmonoxid. in Form farbloser Kristalle an, die aus wenig Benzol umkristallisiert werden können. Ausbeute: 37 g, d.i. 93,5% d.Th.,Fp.158—161 °C (im Vakuum) Analyse C24H20P2O ber. C: 74,61%; H: 5,22%; P: 16,03%; O 4,14% gef. C: 74,01% H: 5,42% P: 15,56%

### Tetraphenyldiphosphinmonosulfid: (nach: H. Matschiner, F. Krech, A. Steinert, Z. Anorg. Allg. Chem., 1969, 371, 256-262.)

5 g Tetraphenyldiphosphin werden in 50 ml Schwefelkohlenstoff gelöst und mit 0,43 g Schwefel umgesetzt. Nach dem Abdestillieren des Lösungsmittels wird der Rückstand mehrmals aus Benzin (Kp. 115°C) umkristallisiert. Fp. 138°C; Ausbeute 1,2 g (22 % d. Th.). C24H2OP2S (402,4) ber. P 15,39 % (gef. 15,15%); ber. S 7,97% (gef. 7,91%).
1,1,3,3-Tetraallyloxy-2-phenyltriphosphin-1,3-dioxid

Diese Verbindung wurde wie folgt synthetisiert:

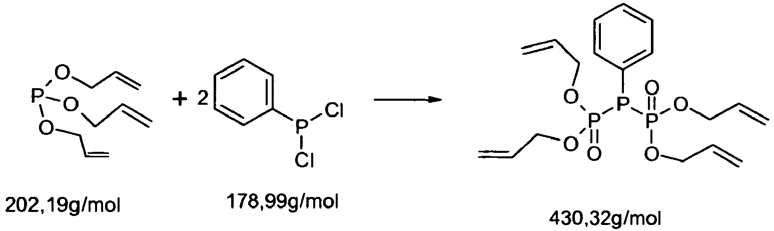

Ansatz:

| | | |
|---|---|---|
| 44,7g | 0,25mol | Dichlorphenylphosphin |
| 101,1g | 0,5mol | Triallylphosphit |
| 100ml | | Acetonitril |

### Versuchsdurchführung:

Dichlorphenylphosphin und Acetonitril im Kolben unter Rühren vorgelegt. Innerhalb 52min bei 22-36°C das Triallylphosphit zugetropft. Auf ca. 68°C aufgeheizt und 1,5h gerührt. 31 P-NMR aus der Reaktionslösung zeigt fast vollst. Umsatz. Am nächsten Tag weitere 4h bei ca. 68°C (leichter Rückfluss) nachgerührt. Am Rotationsverdampfer eingeengt. Anschließend bei 80°C und 0,1 mbar Ölpumpenvakuum für 4h getrocknet. Rohausbeute: 92,54g (86 %), Reinheit (NMR): 60 %. ³¹P-NMR (toluol_{d8}), [ppm] : 28.9 (d, ¹J_{P,P}=165 Hz), -59.9 (t, ¹J_{P,P}=164 Hz)

### 1,1,3,3-Tetramethoxy-2-phenyltriphosphin-1,3-dioxid

Analog K. M. Abraham, J.R.v. Wazer, Inorg. Chem. 1976, 15, 9, 2322-2323 synthetisiert nach Demik, N. N.; Kabachnik, M. M.; Novikova, Z. S.; Beletskaya, I. P.; J. Gen. Chem. USSR (Engl. Transl.); English; 61; 2; 1991; 460 - 461; Zhurnal Obshchei Khimii; Russian; 61; 2; 1991; 506 - 507.

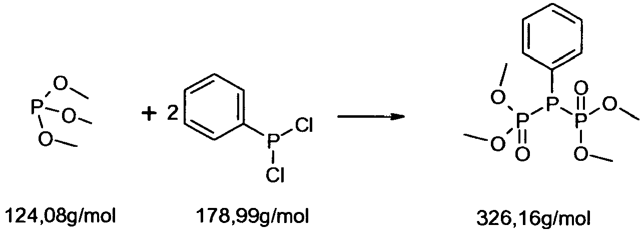

### Ansatz:

| | | |
|---|---|---|
| 44,7g | 0,25mol | Dichlorphenylphosphin |
| 62,04g | 0,5mol | Trimethylphosphit |
| 100ml | | Toluol |

### Versuchsdurchführung:

Phosphin, Phosphit und Toluol im Kolben unter Rühren vorgelegt. Innerhalb 0,5h auf 113°C (120°C Badtemperatur) erwärmt. 6h bei dieser Temperatur gerührt, wobei eine leichte Gasentwicklung sichtbar ist. Danach war keine Gasentwicklung mehr zu sehen. 31 P-NMR aus der Reaktionslösung zeigt vollst. Umsatz.

Reaktionsgemisch am Rotationsverdampfer eingeengt. Rückstand riecht übelst nach Trimethylphosphit. Mit MTB-Ether versetzt und erneut eingeengt. Rückstand an der Ölpumpe (0.1 mbar) im Vakuum bei 60°C für 5h getrocknet. Rohausbeute: 67,66g (83%), Reinheit (NMR): 78 %.
1,1,3,3-Tetraethoxy-2-phenyltriphosphin-1,3-dioxid

Herstellung nach Demik, N. N.; Kabachnik, M. M.; Novikova, Z. S.; Beletskaya, I. P.; J. Gen. Chem. USSR (Engl. Transl.); English; 61; 2; 1991; 460 -461; Zhurnal Obshchei Khimii; Russian; 61; 2; 1991; 506 - 507.

Eine Mischung aus 0,05 mol Phenylphosphordichlorid, 0,1 mol Triethylphosphite und 5 mol% wasserfreiem Nickelchlorid wurde 30 Minuten bei 150°C in trockenen ArgonAtmosphäre erhitzt. Die Reaktionsmischung wurde fraktioniert. Die Ausbeute betrug 94%, Siedepunkt 99°C (0,2 mm).

### Pentaphenylcyclopentaphosphin (Referenz): (nach: W. A. Henderson, M. Epstein, F. S. Seichter, J. Am. Chem. Soc., 1963, 85, 2462-2466.)

Phenyldichlorphosphin (8.9 g, 0.05 mol) wurde unter Rühren zu 1.2 g (0.05 mol) Magnesiumspäne in 50 mL Tetrahydrofuran als Lösungsmittel gegeben. Die Reaktion war stark exotherm und benötigte einen Kondensationskühler, langsame Zugabe des Phenyldichlorphosphins und zeitweise externe Kühlung in einem Wasserbad. Nachdem das meiste des Phosphins zugegeben war, begann Salz auszufallen. Die Zugabe war nach 30 Minuten beendet. Nach mehreren Stunden verblieben nur Spuren von Metall. Das Salz wurde durch Zugabe einer kleinen Menge Aceton aufgelöst und Magnesium abfiltriert. Nach Zugabe von 30 mL bildete sich ein Zweiphasensystem mit einer organischen Schicht und einer Salzwasserschicht. Nach Zugabe einer zweiten Portion Wasser zu der organischen Schicht, fielen 4,0 g (84%) Tetraphenylcyclotetraphosphine mit einem Schmelzpunkt von 148-152°C an.

### Beispiele 1 bis 10: Expandierbares Polystyrol (EPS)

7 Gew.-Teile n-Pentan wurden in eine Polystyrolschmelze aus PS 148G der BASF SE mit einer Viskositätszahl VZ von 83 ml/g eingemischt. Nach Abkühlen der treibmittelhaltigen Schmelze von ursprünglich 260°C auf eine Temperatur von 190°C, wurde eine Polystyrolschmelze, welche die in der Tabelle genannten Flammschutzmittel enthielt, über einen Seitenstromextruder in den Hauptstrom eingemischt. Die angegebenen Mengen in Gew.-Teilen beziehen sich auf die gesamte Polystyrolmenge.

Das Gemisch aus Polystyrolschmelze, Treibmittel und Flammschutzmittel wurde mit 60 kg/h durch eine Düsenplatte mit 32 Bohrungen (Durchmesser der Düsen 0,75 mm) gefördert. Mit Hilfe einer druckbeaufschlagten Unterwassergranulierung wurden kompakte Granulate mit enger Größenverteilung hergestellt.

Durch Einwirkung von strömendem Wasserdampf wurden die Granulate vorgeschäumt und nach 12-stündiger Lagerung durch weitere Behandlung mit Wasserdampf in einer geschlossenen Form zu Schaumstoffblöcken einer Dichte von 15 kg/m³ verschweißt.

Die Ermittlung des Brandverhaltens der Schaumstoffplatten erfolgte nach 72-stündiger Lagerung bei einer Schaumstoffdichte von 15 kg/m³ nach DIN 4102. Art und Menge des eingesetzten Flammschutzmittels und die Verlöschzeiten sind in Tabelle 1 zusammengestellt. Die Beispiele 1 bis 10 und der Vergleichsversuch V1 haben den Brandtest B2 bestanden.

### Vergleichsversuche V1 - V3:

Analog den Beispielen 1 bis 3 wurde expandierbares Polystyrol mit Flammschutzmitteln hergestellt:
V1 Hexabromcyclododecan (HBCD)
V2 9,14-Dihydro-9-oxa-10-phosphaphenanthren-10-oxid (DOP) (nach WO 2006/027241)
V3 kein Flammschutzmittel

**Tabelle 1: Brandtest an den Beispielen 1 - 10 und V1 - V3**

| Beispiel | Flammschutzmittel | Flammschutzmittelmenge Gew-% bezogen auf Polystyrol | Brandtest B2 (DIN 4102) Verlöschzeit [s] |
|---|---|---|---|
| V1 | HBCD | 4 | 6,4 s |
| 1 | FR 1 | 8 | 7,1 |
| 2 | FR 2 | 8 | 5,8 |
| 3 | FR 3 | 8 | 6,9 |
| 4 | FR 4 | 8 | 5,1 |
| 5 | FR 5 | 8 | 7,9 |
| 6 (Referenz) | FR 6 | 8 | 5,4 |
| 7 | FR 7 | 8 | 7,9 |
| 8 | FR 8 | 8 | 5,9 |
| 9 | FR 9 | 8 | 8,1 |
| 10 | FR 10 | 8 | 5,6 |
| V2 | DOP | 8 | 20 s,n.b. |
| V3 | - | | brennt ab, n.b. |

| | | | |
|---|---|---|---|
| n.b.: Brandtest B2 nicht bestanden | | | |

### Beispiele 11 - 15: Extrudierte Polystyrol-Schaumstoffplatten (XPS)

100 Gew.Teile Polystyrol 158K der BASF SE mit einer Viskositätszahl von 98 ml/g, 0,1 Teile Talkum als Keimbildner zur Regelung der Zellgröße und die in der Tabelle angegebenen Teile an Flammschutzmitteln sowie gegebenenfalls Flammschutzmittelsynergisten (z.B. 2,3-Diphenyl-2,4-dimethylbutan) wurden einem Extruder mit einem inneren Schneckendurchmesser von 120 mm kontinuierlich zugeführt. Durch eine in den Extruder angebrachte Einlassöffnung wird gleichzeitig ein Treibmittelgemisch aus 3,25 Gew. Teilen Ethanol und 3,5 Gew. Teilen CO2 kontinuierlich eingedrückt. Das in dem Extruder bei 180 °C gleichmäßig geknetete Gel wird durch eine Beruhigungszone geführt und nach einer Verweilzeit von 15 Minuten mit einer Austrittstemperatur von 105 °C durch eine 300 mm breite und 1,5 mm weite Düse in die Atmosphäre extrudiert. Der Schaum wird durch einen mit dem Extruder verbundenen Formkanal geführt, wobei eine geschäumte Plattenbahn mit einem Querschnitt 650 mmx50 mm und einer Dichte von 35g/l entsteht. Das Produkt wurde in Platten geschnitten. Geprüft wurde das Brandverhalten der Proben nach einer Ablagerungszeit von 30 Tagen nach DIN 4102.

Art und Menge des eingesetzten Flammschutzmittels und die Verlöschzeiten sind in Tabelle 2 zusammengestellt. Die Beispiele 11 - 15 und der Vergleichsversuch V4 haben den Brandtest B2 bestanden.

**Tabelle 2: Brandtest an den Beispielen 11 - 15**

| Beispiel | Flammschutzmittel | Flammschutzmittelmenge Gew-% bezogen auf Polystyrol | Brandtest B2 (DIN 4102) Verlöschzeit [s] |
|---|---|---|---|
| V4 | HBCD | 4 | 9,4 s |
| 11 | FR 1 | 8 | 7,9 |
| 12 | FR 2 | 8 | 9,8 |
| 13 | FR 3 | 8 | 8,9 |
| 14 | FR 4 | 8 | 9,1 |
| 15 | FR 4 | 6 | 7,1 |
| | | + 0,2 Teile 2,3- diphenyl-2,4-dimethylbutan | |

## Patentansprüche

1. Halogenfreie, flammgeschützte Polymerschaumstoffe, **dadurch gekennzeichnet, dass** sie als Flammschutzmittel mindestens eine acyclische Oligophosphorverbindung, ausgewählt aus acylischen Oligophoshinchalkogeniden mit 2 bis 6 Phosphoratomen und mindestens einer Phosphor-Phosphorbindung, enthalten.

2. Halogenfreie, flammgeschützte Polymerschaumstoffe nach Anspruch 1, **dadurch gekennzeichnet, dass** die Oligophosphorverbindung eine der folgenden Strukturen Ia oder Ib 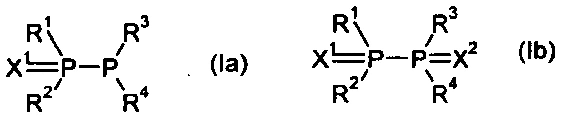 aufweist, wobei die Reste R¹-R⁴ unabhängig von einander ausgewählt sind aus der Gruppe von C₁-C₁₆-alkyl, C₁-C₁₆-alkenyl, C₁-C₁₆-alkoxy, C₁-C₁₆-alkenyloxy, C₃-C₁₀-cycloalkyl, C₃-C₁₀-cycloalkoxy, C₆-C₁₀-aryl, C₆-C₁₀-aryloxy, C₆-C₁₀-aryl-C₁-C₁₆-alkyl, C₆-C₁₀-aryl-C₁-C₁₆-alkoxy, NR²R³, COR², COOR² und CONR²R³, und die Reste X¹ und X² unabhängig voneinander O oder S bedeuten.

3. Halogenfreie, flammgeschützte Polymerschaumstoffe nach Anspruch 1, **dadurch gekennzeichnet, dass** die Oligophosphorverbindung eine der folgenden Strukturen IIa, IIb oder IIc 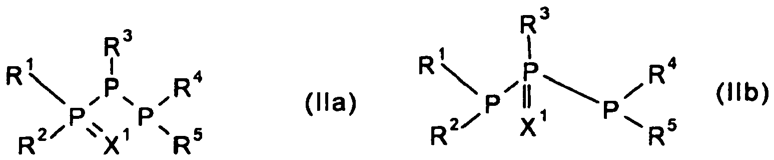 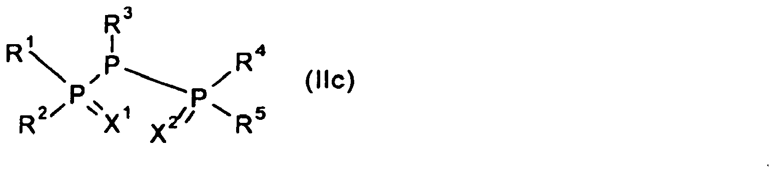 aufweist, wobei die Reste R¹-R⁵ unabhängig von einander ausgewählt sind aus der Gruppe von C₁-C₁₆-alkyl, C₁-C₁₈-alkenyl, C₁-C₁₆-alkoxy, C₁-C₁6-alkenyloxy, C₃-C₁₀-cycloalkyl, C₃-C₁₀-cycloalkoxy, C₆-C₁₀-aryl, C₆-C₁₀-aryloxy, C₆-C₁₀-aryl-C₁-C₁₆-alkyl, C₆-C₁₀₋aryl-C₁-C₁₆-alkoxy, NR²R³, COR², COOR² und CONR²R³, und die Reste X¹ und X² unabhängig voneinander O oder S bedeuten.

4. Halogenfreie, flammgeschützte Polymerschaumstoffe nach Anspruch 1, **dadurch gekennzeichnet, dass** sie als Flammschutzmittel Tetraphenyldiphosphinmonoxid, Tetraphenyldiphosphinmonosulfid, Tetraphenyldiphosphindioxid, Tetraphenyldiphosphindisulfid, Tetraphenyldiphosphinoxidsulfid, Pentaphenylpentaphospholan, 1,1,3,3-Tetramethoxy-2-phenyltriphosphin-1,3-dioxid, 1,1,3,3-Tetraethoxy-2-phenyltriphosphin-1,3-dioxid, 1,1,3,3-Tetraallyloxy-2-phenyltriphosphin-1,3-dioxid oder Mischungen davon enthalten.

5. Halogenfreie, flammgeschützte Polymerschaumstoffe nach einem der Ansprüche 1 bis 4, **dadurch gekennzeichnet, dass** sie die acyclischen Oligophosphorverbindungen in einer Menge im Bereich von 0,5 bis 25 Gew.-%, bezogen auf den Polymerschaumstoff, enthalten.

6. Halogenfreie, flammgeschützte Polymerschaumstoffe nach einem der Ansprüche 1 bis 5, **dadurch gekennzeichnet, dass** sie eine Dichte im Bereich von 5 bis 200 kg/m³ aufweisen.

7. Halogenfreie, flammgeschützte Polymerschaumstoffe nach einem der Ansprüche 1 bis 6, **dadurch gekennzeichnet, dass** mehr als 80 % der Zellen geschlossenzellig sind.

8. Halogenfreie, flammgeschützte Polymerschaumstoffe nach einem der Ansprüche 1 bis 7, **dadurch gekennzeichnet, dass** sie als Polymer ein Styrolpolymer enthalten.

9. Verfahren zur Herstellung von halogenfrei flammgeschützten, expandierbaren Styrolpolymeren (EPS) oder von flammgeschützten Styrolpolymerextrusionschaumstoffen (XPS), **dadurch gekennzeichnet, dass** als Flammschutzmittel eine acyclische Oligophosphorverbindung gemäß einem der Ansprüche 1 bis 5 eingesetzt wird.

10. Verfahren zur Herstellung von halogenfrei flammgeschützten, expandierbaren Styrolpolymeren (EPS), umfassend die Schritte
a) Einmischen eines organischen Treibmittels und 1-25 Gew.-% acyclischen Oligophosphorverbindungen gemäß einem der Ansprüche 1 bis 4 in eine Styrolpolymerschmelze mittels statischen oder dynamischen Mischer bei einer Temperatur von mindestens 150°C,
b) Kühlen der treibmittelhaltigen Styrolpolymerschmelze auf eine Temperatur von mindestens 120°C
c) Austrag durch eine Düsenplatte mit Bohrungen, deren Durchmesser am Düsenaustritt höchstens 1,5 mm beträgt und
d) Granulieren der treibmittelhaltigen Schmelze direkt hinter der Düsenplatte unter Wasser bei einem Druck im Bereich von 1 bis 20 bar.

11. Verfahren zur Herstellung von halogenfrei flammgeschützten, expandierbaren Styrolpolymeren (EPS) durch Polymerisation von Styrol in wässriger Suspension in Gegenwart eines organischen Treibmittels und eines Flammschutzmittels, **dadurch gekennzeichnet, dass** als Flammschutzmittel acyclische Oligophosphorverbindungen gemäß einem der Ansprüche 1 bis 5 eingesetzt werden.

12. Halogenfrei flammgeschützte expandierbare Styrolpolymere (EPS), erhältlich nach einem der Ansprüche 9 bis 11.

13. Verfahren zur Herstellung von halogenfrei, flammgeschützten Polystyrolpartikelschaumstoffen, **dadurch gekennzeichnet, dass** man expandierdierbare, Styrolpolymere gemäß Anspruch 12 in einem ersten Schritt mittels Heißluft oder Wasserdampf zu Schaumpartikeln mit einer Dichte im Bereich von 8 bis 200 g/l vorschäumt und in einem 2. Schritt in einer geschlossenen Form verschweißt.

## Claims

1. A halogen-free, flame-retardant polymer foam which comprises, as flame retardant, at least one acyclic oligophosphorus compound selected from acyclic oligophosphine chalcogenides having from 2 to 6 phosphorus atoms and having at least one phosphorus-phosphorus bond.

2. The halogen-free, flame-retardant polymer foam according to claim 1, wherein the oligophosphorus compound has one of the following structures, Ia or Ib 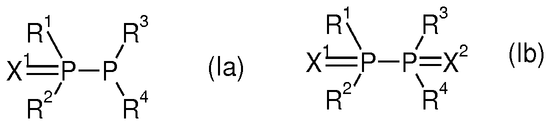 where the radicals R¹-R⁴, independently of one another, have been selected from the group of C₁-C₁₆-alkyl, C₁-C₁₆-alkenyl, C₁-C₁₆-alkoxy, C₁-C₁₆-alkenyloxy, C₃-C₁₀-cycloalkyl, C₃-C₁₀-cycloalkoxy, C₆-C₁₀-aryl, C₆-C₁₀-aryloxy, C₆-C₁₀-aryl-C₁-C₁₆-alkyl, C₆-C₁₀-aryl-C₁-C₁₆-alkoxy, NR²R³, COR², COOR², and CONR²R³, and the radicals X¹ and X², independently of one another, are 0 or S.

3. The halogen-free, flame-retardant polymer foam according to claim 1, wherein the oligophosphorus compound has one of the following structures IIa, IIb, or IIc 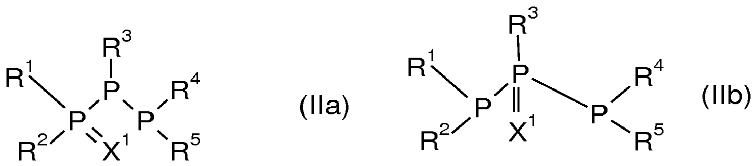 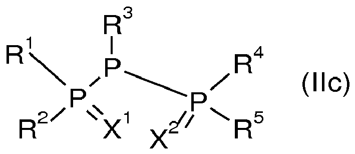 where the radicals R¹-R⁵, independently of one another, have been selected from the group of C₁-C₁₆-alkyl, C₁-C₁₆-alkenyl, C₁-C₁₆-alkoxy, C₁-C₁₆-alkenyloxy, C₃-C₁₀-cycloalkyl, C₃-C₁₀-cycloalkoxy, C₆-C₁₀-aryl, C₆-C₁₀-aryloxy, C₆-C₁₀-aryl-C₁-C₁₆-alkyl, C₆-C₁₀-aryl-C₁-C₁₆-alkoxy, NR²R³, COR², COOR², and CONR²R³ , and the radicals X¹ and X², independently of one another, are 0 or S.

4. The halogen-free, flame-retardant polymer foam according to claim 1, which comprises, as flame retardant, tetraphenyldiphosphine monoxide, tetraphenyldiphosphine monosulfide, tetraphenyldiphosphine dioxide, tetraphenyldiphosphine disulfide, tetraphenyldiphosphine oxide sulfide, pentaphenylpentaphospholane, 1,1,3,3-tetramethoxy-2-phenyltriphosphine 1,3-dioxide, 1,1,3,3-tetraethoxy-2-phenyltriphosphine 1,3-dioxide, 1,1,3,3-tetraallyloxy-2-phenyltriphosphine 1,3-dioxide, or a mixture thereof.

5. The halogen-free, flame-retardant polymer foam according to any of claims 1 to 4, which comprises an amount in the range from 0.5 to 25% by weight, based on the polymer foam, of the acyclic oligophosphorus compounds.

6. The halogen-free, flame-retardant polymer foam according to any of claims 1 to 5, the density of which is in the range from 5 to 200 kg/m³.

7. The halogen-free, flame-retardant polymer foam according to any of claims 1 to 6, wherein more than 80% of the cells are closed cells.

8. The halogen-free, flame-retardant polymer foam according to any of claims 1 to 7, which comprises, as polymer, a styrene polymer.

9. A process for the production of expandable styrene polymers (EPS) rendered flame-retardant by a halogen-free method, or of flame-retardant extruded styrene polymer foams (XPS), which comprises using, as flame retardant, an acyclic oligophosphorus compound according to any of claims 1 to 5.

10. A process for the production of expandable styrene polymers (EPS) rendered flame-retardant by a halogen-free method, comprising the steps of
a) mixing to incorporate an organic blowing agent and from 1-25% by weight of acyclic oligophosphorus compounds according to any of claims 1 to 4 into a styrene polymer melt by means of a static or dynamic mixer at a temperature of at least 150°C,
b) cooling of the styrene polymer melt comprising blowing agent, to a temperature of at least 120°C,
c) discharge via a die plate with holes, the diameter of which at the die outlet is at most 1.5 mm, and
d) pelletizing of the melt comprising blowing agent, directly downstream of the die plate, under water, at a pressure in the range from 1 to 20 bar.

11. A process for the production of expandable styrene polymers (EPS) rendered flame-retardant by a halogen-free method, via polymerization of styrene in aqueous suspension in the presence of an organic blowing agent and of a flame retardant, which comprises using, as flame retardant, acyclic oligophosphorus compounds according to any of claims 1 to 5.

12. An expandable styrene polymer (EPS) rendered flame-retardant by a halogen-free method, and obtainable according to any of claims 9 to 11.

13. A process for the production of molded polystyrene foams rendered flame-retardant by a halogen-free method, which comprises, in a first step, prefoaming expandable styrene polymers according to claim 12 by means of hot air or steam to give foam beads with density in the range from 8 to 200 g/l, and, in a 2^{nd} step, fusing these in a closed mold.

## Revendications

1. Mousses de polymère ignifugées, exemptes d'halogène, **caractérisées en ce qu'**elles contiennent, comme agent ignifuge, au moins un composé oligophosphoré acyclique, choisi parmi les chalcogénures d'oligophosphines acycliques comprenant 2 à 6 atomes de phosphore et au moins une liaison phosphore-phosphore.

2. Mousses de polymère ignifugées, exemptes d'halogène selon la revendication 1, **caractérisées en ce que** le composé oligophosphoré présente une des structures suivantes Ia ou Ib 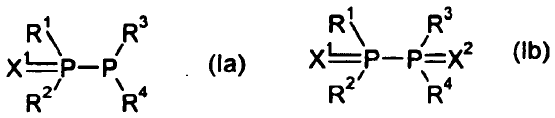 les radicaux R¹-R⁴ étant choisis indépendamment les uns des autres dans le groupe formé par C₁-C₁₆-alkyle, C₁-C₁₆-alcényle, C₁-C₁₆₋alcoxy, C₁-C₁₆₋alcényloxy, C₃-C₁₀-cycloalkyle, C₃-C₁₀-cycloalcoxy, C₆-C₁₀-aryle, C₆-C₁₀-aryloxy, C₆-C₁₀-aryl-C₁-C₁₆-alkyle, C₆-C₁₀-aryl-C₁-C₁₆-alcoxy, NR²R³, COR², COOR² et CONR²R³, et les radicaux X¹ et X² représentant, indépendamment l'un de l'autre, 0 ou S.

3. Mousses de polymère ignifugées, exemptes d'halogène selon la revendication 1, **caractérisées en ce que** le composé oligophosphoré présente une des structures suivantes IIa, IIb ou IIc 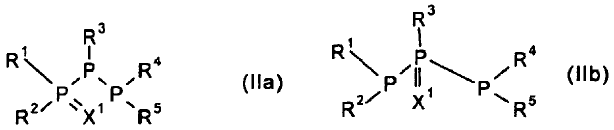 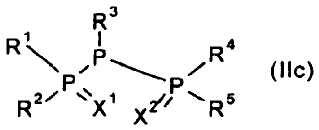 les radicaux R¹-R⁵ étant choisis indépendamment les uns des autres dans le groupe formé par C₁-C₁₆-alkyle, C₁-C₁₆-alcényle, C₁-C₁₆₋alcoxy, C₁-C₁₆₋alcényloxy, C₃-C₁₀-cycloalkyle, C₃-C₁₀-cycloalcoxy, C₆-C₁₀-aryle, C₆-C₁₀-aryloxy, C₆-C₁₀-aryl-C₁-C₁₆-alkyle, C₆-C₁₀-aryl-C₁-C₁₆-alcoxy, NR²R³, COR², COOR² et CONR²R³, et les radicaux X¹ et X² représentant, indépendamment l'un de l'autre, 0 ou S.

4. Mousses de polymère ignifugées, exemptes d'halogène selon la revendication 1, **caractérisées en ce qu'**elles contiennent, comme agent ignifuge, le monoxyde de tétraphényldiphosphine, le monosulfure de tétraphényldiphosphine, le dioxyde de tétraphényldiphosphine, le disulfure de tétraphényldiphosphine, le sulfure de tétraphényldiphosphinoxyde, le pentaphénylpentaphospholane, le 1,3-dioxyde de 1,1,3,3-tétraméthoxy-2-phényltriphosphine, le 1,3-dioxyde de 1,1,3,3-tétraéthoxy-2-phényltriphosphine, le 1,3-dioxyde de 1,1,3,3-tétraallyloxy-2-phényltriphosphine ou leurs mélanges.

5. Mousses de polymère ignifugées, exemptes d'halogène selon l'une quelconque des revendications 1 à 4, **caractérisées en ce qu'**elles contiennent les composés oligophosphorés acycliques en une quantité de 0,5 à 25 % en poids, par rapport à la mousse de polymère.

6. Mousses de polymère ignifugées, exemptes d'halogène selon l'une quelconque des revendications 1 à 5, **caractérisées en ce qu'**elles présentent une densité dans la plage de 5 à 200 kg/m³.

7. Mousses de polymère ignifugées, exemptes d'halogène selon l'une quelconque des revendications 1 à 6, **caractérisées en ce que** plus de 80 % des cellules sont des cellules fermées.

8. Mousses de polymère ignifugées, exemptes d'halogène selon l'une quelconque des revendications 1 à 7, **caractérisées en ce qu'**elles contiennent un polymère de styrène comme polymère.

9. Procédé pour la préparation de polymères de styrène expansibles (EPS) exempts d'halogène, ignifugés ou de mousses d'extrusion de polymère de styrène (XPS) ignifugées, **caractérisé en ce qu'**on utilise, comme agent ignifuge, un composé oligophosphoré acyclique selon l'une quelconque des revendications 1 à 5.

10. Procédé pour la préparation de polymères de styrène expansibles (EPS) exempts d'halogène, ignifugés comprenant les étapes suivantes :
a) incorporation d'un agent gonflant organique et de 1-25 % en poids de composés oligophosphorés acycliques selon l'une quelconque des revendications 1 à 4 dans une masse fondue de polymère de styrène au moyen de mélangeurs statiques ou dynamiques à une température d'au moins 150°C,
b) refroidissement de la masse fondue de polymère de styrène contenant l'agent gonflant à une température d'au moins 120°C,
c) évacuation via une plaque de filière comportant des trous dont le diamètre à la sortie de la filière est d'au plus 1,5 mm et
d) granulation de la masse fondue contenant l'agent gonflant directement en aval de la plaque de filière sous eau à une pression dans la plage de 1 à 20 bars.

11. Procédé pour la préparation de polymères de styrène expansibles (EPS) exempts d'halogène, ignifugés par polymérisation de styrène en suspension aqueuse en présence d'un agent gonflant organique et d'un agent ignifuge, **caractérisé en ce qu'**on utilise, comme agent ignifuge, des composés oligophosphorés acycliques selon l'une quelconque des revendications 1 à 5.

12. Polymères de styrène expansibles (EPS), exempts d'halogène, ignifugés, pouvant être obtenus selon l'une quelconque des revendications 9 à 11.

13. Procédé pour la préparation de mousses de particules de polystyrène, exemptes d'halogène, ignifugées, **caractérisé en ce qu'**on mousse au préalable des polymères de styrène expansibles selon la revendication 12 dans une première étape au moyen d'air chaud ou de vapeur d'eau en particules de mousse d'une densité dans la plage de 8 à 200 g/l et on les soude dans une 2ème étape dans un moule fermé.
